# EUROPÄISCHE PATENTANMELDUNG

(11) **EP 3 546 315 A1**
(43) Veröffentlichungstag der Anmeldung: **02.10.2019**
(21) Anmeldenummer: 18163850.3
(22) Anmeldetag: 26.03.2018
(51) Int. Cl.: B62B 5/00, B62B 3/10, B62B 3/16

(54) **ROLLPALETTE**

(71) Anmelder: FEIL GmbH, 33142 Büren (DE)
(72) Erfinder: BIEHL, Waldemar, 59581 Warstein (DE)
(74) Vertreter: Andrejewski - Honke Patent- und Rechtsanwälte Partnerschaft mbB

(57) **Zusammenfassung**

Gegenstand der Erfindung ist eine Rollpalette, die mit einem Rolluntersatz (1) aus thermoplastischem Kunststoff ausgerüstet ist. Der Rolluntersatz (1) weist an seiner Unterseite zwei Laufrollenpaare (2, 3) auf. Ferner ist der Rolluntersatz (1) an seiner Oberseite mit einem gegenüber einem Boden (6) hochstehenden Umfangsrand (8) ausgerüstet, welcher wenigstens einen ersten innenseitigen Randstreifen (9) umschließt. Innenrandseitig des Randstreifens (9) ist ein Anschlagrand (10) in Richtung auf den Boden (6) angeschlossen. Erfindungsgemäß steht der besagte Anschlagrand (10) auf einem zweiten innenseitigen Randstreifen (11) auf, an den innenrandseitig ein bis zum Boden (6) reichender Bodenrand (7) anschließt. Auf diese Weise definieren der Boden (6) mit dem Bodenrand (7), der zweite Randstreifen (11) zusammen mit dem Anschlagrand (10) und schließlich der erste Randstreifen (9) zusammen mit dem Umfangsrand (8) jeweils Aufnahmen für Transport- und/oder Lagerkästen (12) mit in dieser Reihenfolge wachsender Bodenfläche.

## Beschreibung

Die Erfindung betrifft eine Rollpalette, mit einem Rolluntersatz aus thermoplastischem Kunststoff, wobei der Rolluntersatz an seiner Unterseite zwei Laufrollenpaare aufweist, wobei ferner der Rolluntersatz an seiner Oberseite mit einem gegenüber einem Boden hochstehenden Umfangsrand ausgerüstet ist, welcher wenigstens einen ersten innenseitigen Randstreifen umschließt, und wobei innenrandseitig des Randstreifens ein Anschlagrand in Richtung auf den Boden angeschlossen ist.

Rollpaletten werden typischerweise in der Logistik ebenso wie im Einzelhandel oder in Lebensmittelbetrieben eingesetzt. Auch Getränkemärkte, Supermärkte und andere Einzelhandelsgeschäfte greifen hierauf oftmals zurück. Denn mithilfe solcher Rollpaletten werden typischerweise Waren zwischen einem Lager und Verkaufsregalen oder auch zwischen einem Lager und einer weiteren Verarbeitungsstätte transportiert. Dazu verfügen die Rollpaletten über eine rechteckförmige Tragplatte, die mit beispielsweise Aufnahmen für hierauf verrutschsicher aufsetztbare Transport- und/oder Lagerbehälter ausgerüstet ist.

Eine Rollpalette des eingangs beschriebenen Aufbaus bzw. die Kombination einer solchen Rollpalette und eines Transport- und/oder Lagerbehälters wird in der DE 20 2007 005 270 U1 beschrieben. Dort ist die Tragplatte bzw. der Rolluntersatz mit einem Umfangsrand ausgerüstet, der einen Randstreifen umgibt. Der Randstreifen ist gegenüber einem Boden des Rolluntersatzes erhöht. Auf diese Weise kann eine quaderförmige Kiste mit geringem Spiel in den von dem Umfangsrand des Rolluntersatzes umgrenzten lichten Innenraum eingefügt werden.

Da die quaderförmige Kiste an der Unterseite ihres Bodens mit einem nach unten vorstehenden Zentriersteg ausgerüstet ist, welcher gegenüber dem Rand des Bodens versetzt ist, lässt sich die quaderförmige Kiste mit geringem Spiel in den lichten Innenraum des Rolluntersatzes einfügen. Bei dem Transport- und/oder Lagerkasten kann es sich um einem sogenannten Euronorm-Kasten handeln. Tatsächlich sind solche stapelbaren Mehrwegtransport- und lagerkästen aus thermoplastischem Kunststoff hinsichtlich Ihrer Auslegung und der Abmessungen entsprechend der Norm DIN 55423-1 genormt.

Rollpaletten bzw. deren Rolluntersatz sind überwiegend aus Kunststoff hergestellt, um die Abwaschbarkeit zu gewährleisten. Das ist insbesondere für Einsätze in der Lebensmittelindustrie unabdingbar. Außerdem lassen sich Rollpaletten mit einem Rolluntersatz aus thermoplastischem Kunststoff besonders kostengünstig herstellen und verfügen über ein vergleichsweise geringes Gewicht.

Neben den zuvor beschriebenen Anwendungsfällen kommen solche Rollpaletten grundsätzlich auch als gleichsam Boden bei einem Rollwagen oder Rollcontainer zum Einsatz, wie dies in dem Gebrauchsmuster DE 20 2016 101 100 U1 der Anmelderin im Detail beschrieben wird. Das hat sich grundsätzlich bewährt.

Der flächendeckende Einsatz solcher Rollpaletten stößt dann an Grenzen, wenn die hierauf zu platzierenden Lager- und/oder Transportkästen nicht genormt sind bzw. Kästen unterschiedlicher Abmessungen mit ein und derselben Rollpalette transportiert werden sollen. Zwar gibt es im Stand der Technik mit der JP 8-13 30 90 A bereits Ansätze dahingehend, Kästen verschiedener Abmessungen aufnehmen zu können. Dazu sind unterschiedliche Aufnahmen auf der Tragplatte des Rolluntersatzes realisiert. - Die bisherigen Lösungen können jedoch nicht rundherum zufrieden stellen.

Dementsprechend liegt der Erfindung das technische Problem zugrunde, eine derartige Rollplatte so weiterzuentwickeln, dass Kästen mit vergleichbarem Umriss, aber unterschiedlich großer Bodenfläche einwandfrei und möglichst verrutschsicher transportiert werden können.

Zur Lösung dieser technischen Problemstellung ist eine gattungsgemäße Rollpalette im Rahmen der Erfindung dadurch gekennzeichnet, dass der Anschlagrand auf einem zweiten innenseitigen Randstreifen aufsteht, an den innenrandseitig ein bis zum Boden reichender Bodenrand anschließt, sodass der Boden mit dem Bodenrand, der zweite Randstreifen mit dem Anschlagrand und schließlich der erste Randstreifen mit dem Umfangsrand jeweils Aufnahmen für typischerweise bis zu drei (oder mehr) Transport- und/oder Lagerkästen mit in dieser Reihenfolge wachsender Boden-fläche definieren.

D. h., erfindungsgemäß verfügt die Rollpalette über insgesamt drei unterschiedlich große Aufnahmen für zugehörige bis zu drei (oder mehr) Transport- und/oder Lagerkästen. So bilden zunächst der im Rolluntersatz vorgesehen Boden und der Bodenrand eine erste Aufnahme. Diese erste Aufnahme kann einen Transport- und/oder Lagerkasten mit geringster Bodenfläche verrutschsicher aufnehmen. Dazu wird der fragliche Transport- und/oder Lagerkasten in den lichten Innenraum des Rolluntersatzes bzw. in die von dem Boden und dem Bodenrand gebildete Aufnahme größtenteils verrutschsicher eingesetzt.

Soll ein Transport- und/oder Lagerkasten mit einer demgegenüber größeren Bodenfläche mithilfe der erfindungsgemäßen Rollpalette transportiert werden, so steht hierfür der zweite Randstreifen mit dem Anschlagrand zur Verfügung. Ein Transport- und/oder Lagerkasten mit demgegenüber nochmals vergrößerter Bodenfläche findet schließlich in der größten Aufnahme im lichten Innenraum der Rollpalette Platz, nämlich derjenigen, wie sie der erste Randstreifen mit dem Umfangsrand definiert.

Auf diese Weise lassen sich Transport- und/oder Lagerkästen mit unterschiedlicher Bodenfläche einwandfrei in den entsprechenden Aufnahmen im lichten Innenraum des Rolluntersatzes lagesicher transportieren. Die Variabilität wird noch dadurch gesteigert, dass oftmals neben den angesprochenen Transport- und/oder Lagerkästen solche mit demgegenüber halbgroßer Bodenfläche oder sogar Kästen mit einer Bodenfläche existieren, die leidglich ein Viertel der Bodenfläche einnehmen. Dadurch können mehrere dieser kleineren Transport- und/oder Lagerkästen ebenso in der entsprechend gestalteten Aufnahme lagesicher aufgenommen und mithilfe der Rollpalette transportiert werden.

Nach vorteilhafter Ausgestaltung verfügen der erste Randstreifen und der zweite Randstreifen über eine im Wesentlichen übereinstimmende Breite. Außerdem hat es sich bewährt, wenn der Umfangsrand, der Anschlagrand und der Bodenrand darüber hinaus eine überwiegend gleiche Aufbauhöhe aufweisen. Außerdem sind der Umfangsrand, der Anschlagrand und der Bodenrand meistens vertikal orientiert in dieser Reihenfolge von außen nach innen an den Rolluntersatz angeschlossen. Dabei mag ein jeweils vergleichbarer horizontaler Abstand zwischen den genannten Rändern beobachtet werden. Dadurch werden gleichsam treppenartige Abstufungen vom hochstehenden Umfangsrand bis schließlich zum Bodenrand beobachtet, die zu in etwa gleich ausgebildeten Treppen korrespondieren. Das gilt selbstverständlich nicht einschränkend.

Damit die erfindungsgemäße Rollpalette bzw. mehrere dieser Rollpaletten problemlos übereinander gestapelt werden könne, ist der Boden im Regelfall mit zwei Vertiefungspaaren zur Aufnahme der beiden jeweiligen Laufrollenpaare einer darauf gestapelten weiteren Rollpalette ausgerüstet. Die beiden Vertiefungspaare sind dabei jeweils im Eckbereich des Bodens und innenseitig beabstandet zum Bodenrand vorgesehen. Dadurch können die beiden Laufrollenpaare der auf der vorhandenen Rollpalette gestapelten weiteren Rollpalette kollisionsfrei in den beiden zugehörigen Vertiefungspaaren aufgenommen werden. D. h., die einzelnen Ränder und auch die Randstreifen sind jenseits der Vertiefungspaare bzw. der Laufrollenpaare platziert.

Im Regelfall sind die beiden Laufrollenpaare in Konsolen angebracht. Die Konsolen werden wahlweise von einem bodenunterseitigen Schutzrand umgeben. Das gilt meistens für dasjenige Laurollenpaar, welches drehbar ausgelegt ist. Im Regelfall ist ein Laufrollenpaar der beiden Laufrollenpaare mit feststehenden sogenannten Bockrollen ausgerüstet, während das zweite weitere Laufrollenpaar über drehbare Lenkrollen verfügt. Der bodenunterseitige Schutzrand der Konsole ist dabei regelmäßig den Lenkrollen zugeordnet, um die drehbaren Konsolen vor etwaigen Beschädigungen zu schützen.

Der Umfangsrand und/oder der Anschlagrand und/oder der Bodenrand verfügen darüber hinaus oftmals über eckseitige Einkerbungen zur Entwässerung. Auf diese Weise trägt die Erfindung dem Umstand Rechnung, dass die fraglichen Rollpaletten oftmals in der Lebensmittelindustrie eingesetzt werden und demzufolge eine turnusgemäße Reinigung erforderlich ist. Damit sich auf den beiden innenseitigen (horizontalen) Randstreifen nicht dauerhaft Wasser sammelt, sind die fraglichen Einkerbungen vorgesehen. Diese stellen beispielsweise auch sicher, dass bei einem Einsatz draußen, d.h. außerhalb von Gebäuden, etwaiges Regenwasser abfließen kann.

Die beiden Randstreifen sind im Allgemeinen durchlaufend und unterbrechungsfrei ausgebildet. Dadurch definieren die Randstreifen jeweils durchgängige Auflage- oder Stützflächen für die hierauf aufgenommenen Bodenflächen der zugehörigen Transport- und/oder Lagerkästen.

Der Umfangsrand, der Anschlagrand und auch der Bodenrand sind ferner bis auf die zuvor bereits angesprochenen und grundsätzlich optionalen Einkerbungen geschlossen umlaufend ausgebildet. Dadurch wird in Verbindung mit den durchlaufend und unterbrechungsfrei ausgebildeten Randstreifen insgesamt eine jeweilige Aufnahme gebildet, die im Bereich der Auflage des Bodens bzw. der Bodenfläche und auch der Seitenwände des zugehörigen Transport- und/oder Lagerkastens geschlossen ausgebildet ist und folglich einen besonders guten Halt und eine lagesichere Platzierung zur Verfügung stellt.

Der Rolluntersatz inklusive Umfangsrand, Anschlagrand und Bodenrand sowie ggf. die beiden Schutzränder bodenunterseitig im Bereich der Konsolen sind insgesamt als einstückiges Kunststoffspritzgussteil ausgebildet. Dadurch lässt sich der gesamte Rolluntersatz besonders kostengünstig herstellen. Außerdem ist eine einfache Reinigung und Lebensmittelverträglichkeit gegeben. Zu diesem Zweck ist das Kunststoffspritzgussteil typischerweise aus PE (Polyethylen) hergestellt. Grundsätzlich können an dieser Stelle aber auch andere thermoplastische Kunststoffe zum Einsatz kommen.

Der Boden kann insgesamt geschlossen ausgebildet sein. In diesem Fall sind die beiden Vertiefungspaare jeweils tiefgezogen im Boden ausgebildet. Ähnliches gilt auch für den Fall, dass der Boden als offener Boden ausgelegt ist. In diesem Fall sind neben den beiden tiefgezogenen Vertiefungspaaren zusätzlich eine oder mehrere Ausnehmungen realisiert. Die geschlossene oder offene Ausbildung des Bodens hängt im Endeffekt davon ab, welche Traglasten transportiert werden sollen. In diesem Zusammenhang ist es ergänzend möglich, den Boden zusätzlich zu verstärken. Dazu können eine oder mehrere Verstärkungsschienen in Steckkanälen wahlweise platziert werden.

Darüber hinaus hat es sich als besonders günstig erwiesen, wenn ein elektronisches Identifizierungsmittel vorgesehen ist. Dieses elektronische Identifizierungsmittel kann an der Rollpalette angebracht sein. Üblicherweise handelt es sich bei dem elektronischen Identifizierungsmittel um einen sogenannten RFID (Radiofrequenz-Identifikation) -Tag. Dieser kann im einfachsten Fall als ein mit einem Transponder versehener Aufkleber oder auch als ein Anhänger oder auch als ein Einsatz ausgebildet sein.

Im Regelfall arbeitet man mit einem als Aufkleber oder Einsatz ausgebildeten RFID-Tag, der typischerweise an der Unterseite des Bodens des Rolluntersatzes angebracht wird. Hier hat sich außerdem eine geschützte Anbringung hinter dem ohnehin vorhandenen Schutzrand als besonders günstig erwiesen.

Gegenstand der Erfindung ist auch die Kombination einer solchen Rollpalette mit zumindest einem Transport- und/oder Lagerkasten. Der Transport- und/oder Lagerkasten kann über verschiedene Abmessungen verfügen, solange seine Bodenfläche zu einer der erfindungsgemäß realisierten drei gebildeten und unterschiedlichen Aufnahmen passt.

Im Ergebnis wird eine Rollpalette zur Verfügung gestellt, die über eine besondere Variabilität verfügt. Auf diese Weise lassen sich positions- und lagesicher Transport- und/oder Lagerkästen unterschiedlicher Abmessungen bzw. Umrisse mit ein und derselben Rollpalette transportieren. Das war bisher nur sehr eingeschränkt möglich. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Rollpalette perspektivisch,
- Fig. 2: eine Aufsicht auf den Gegenstand nach Fig. 1 und
- Fig. 3: einen schematischen Querschnitt durch den Gegenstand nach den Fig. 1 und 2.

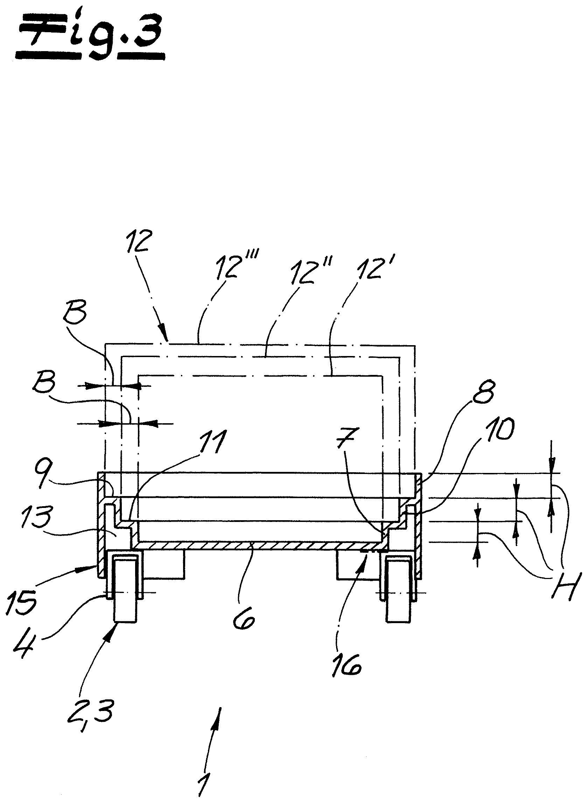

In den Fig. ist eine Rollpalette dargestellt, die mit einem Rolluntersatz 1 aus thermoplastischem Kunststoff ausgerüstet ist. Der Rolluntersatz verfügt an seiner Unterseite über zwei Laufrollenpaare 2, 3. Das Laufrollenpaar 2 ist als Lenkrollen ausgebildet. Bei dem Laufrollenpaar 3 handelt es sich demgegenüber um feststehende Rollen bzw. Bockrollen. Die beiden Laufrollenpaare 2, 3 sind jeweils in Konsolen 4 angebracht, wie man dies insbesondere in der Schnittdarstellung nach der Fig. 3 erkennt.

Hieraus ergibt sich auch, dass die beiden Laufrollenpaare 2, 3 ebenso wie zwei zugehörige Vertiefungspaare 5 jeweils in Eckbereichen des Rolluntersatzes 1 bzw. eines Bodens 6 angeordnet sind. Tatsächlich finden sich die beiden Rollenpaare 2, 3 ebenso wie die beiden Vertiefungspaare 5 innenseitig und beabstandet zu einem Bodenrand 7. Der Bodenrand 7 steht überwiegend senkrecht auf dem Boden 6 auf und umschließt den Boden 6 als hochstehender Rand wie nachfolgend noch näher erläutert wird.

Die beiden Vertiefungspaare 5 stellen sicher, dass die dargestellte Rollpalette bzw. mehrere dieser Rollpaletten übereinander gestapelt werden können. Denn bei einem solchen Stapelvorgang werden in den beiden Vertiefungspaaren 5 die zugehörigen beiden Laufrollenpaare 2, 3 einer darauf gestapelten weiteren Rollpalette aufgenommen, wie dies grundsätzlich bekannt ist und im gattungsbildenden Stand der Technik nach der DE 20 2007 005 270 U1 beschrieben wird.

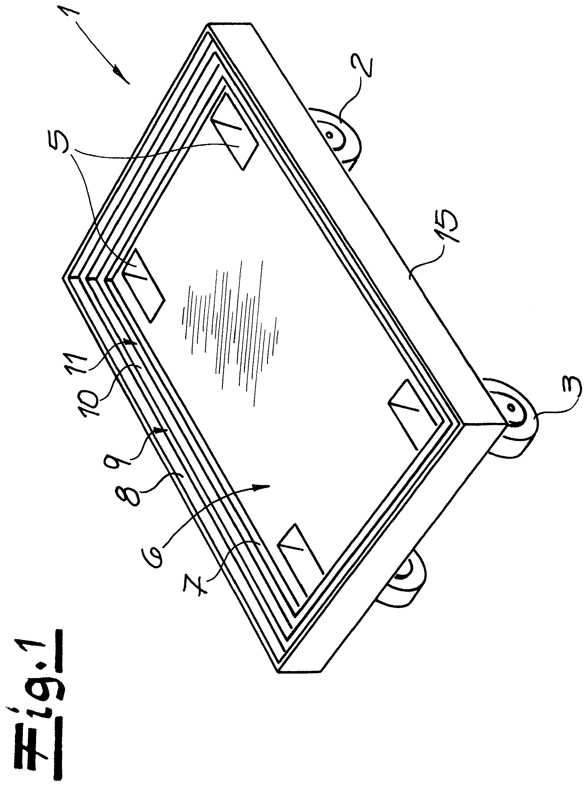

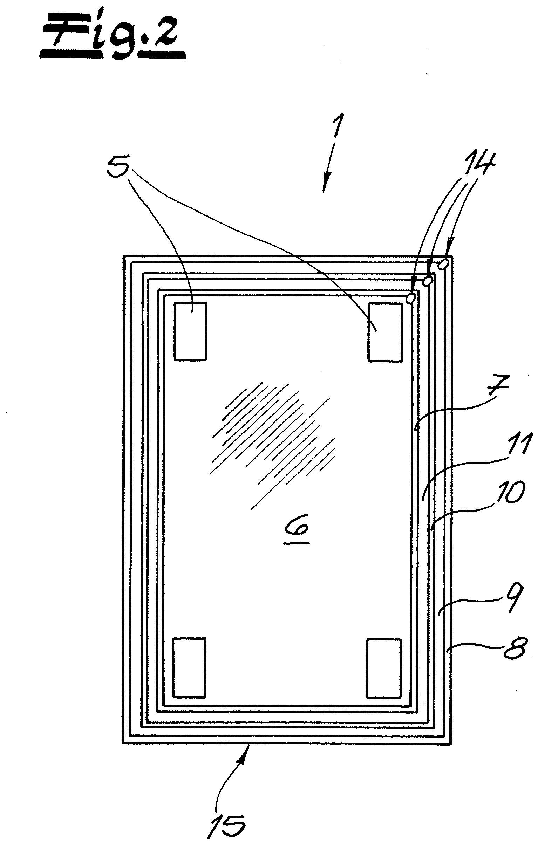

Erfindungsgemäß ist der Rolluntersatz an seiner Oberseite mit einem gegenüber dem Boden 6 hochstehenden Umfangsrand 8 ausgerüstet, wie man insbesondere in den Fig. 1 und 2 erkennt. Der Umfangsrand 8 umschließt einen ersten innenseitigen Randstreifen 9. Der Randstreifen 9 verläuft überwiegend parallel zum Boden 6 und ist gegenüber dem Boden 6 höhenbeabstandet.

Innenrandseitig des fraglichen Randstreifens 9 ist ein Anschlagrand 10 in Richtung auf den Boden 6 angeschlossen. Der Anschlagrand 10 steht seinerseits auf einem zweiten innenseitigen Randstreifen 11 auf. Wie der Randstreifen 9, so ist auch der Randstreifen 11 überwiegend parallel und horizontal orientiert. Im Gegensatz zum ersten Randstreifen 9 verfügt der zweite Randstreifen 11 über eine geringere Querschnittsfläche bzw. spannt eine geringere Umfangsfläche auf. Da die Rollpalette bzw. der Rolluntersatz 1 insgesamt rechteck-förmig gestaltet ist, sind die beiden Randstreifen 9, 11 jeweils als Rechteckstreifen ausgeführt. Der erste innenseitige Randstreifen bzw. Rechteckstreifen 9 spannt dabei eine im Vergleich zum zweiten innenseitigen Randstreifen bzw. Rechteckstreifen 11 größere Rechteckfläche auf.

An den zweiten Randstreifen 11 schließt sich der bereits beschriebene Bodenrand 7 an, der innenrandseitig von dem zweiten innenseitigen Randstreifen 11 bis zum Boden 6 reicht. Auf diese Weise werden drei Aufnahmen für in der Fig. 3 jeweils strichpunktiert angedeutete Transport- und/oder Lagerkästen 12 mit unterschiedlichem Umriss bzw. wachsender Bodenfläche definiert. Man erkennt, dass der Transport- und/oder Lagerkasten 12' die geringste Bodenfläche, der Transport- und/oder Lagerkasten 12" eine demgegenüber größere Bodenfläche und schließlich der Transport- und/oder Lagerkasten 12'" die größte Bodenfläche aufweist. Tatsächlich definieren zunächst einmal der Boden 6 und der Bodenrand 7 eine Aufnahme im lichten Innenraum des Rolluntersatzes 1 zur Aufnahme eines entsprechenden Transport- und/oder Lagerkastens 12 mit kleinster Bodenfläche. Das ist der Transport- und/oder Lagerkasten 12'. Soll demgegenüber ein Transport- und/oder Lagerkasten 12 mit größerer Bodenfläche lage- und positionssicher mithilfe der erfindungsgemäßen Roll-palette transportiert werden, kommt die zweite Aufnahme für den betreffenden Transport- und/oder Lagerkasten 12" zum Einsatz. Die zweite Aufnahme wird von dem zweiten Randstreifen 11 und dem Anschlagrand 10 gebildet. Schließlich wird der größte Transport- und/oder Lagerkasten 12'" in der Aufnahme positions- und lagesicher gehalten, welche von dem ersten Randstreifen 9 in Verbindung mit dem Umfangsrand 8 gebildet wird.

Der erste Randstreifen 9 und der zweite Randstreifen 11 verfügen ausweislich der Fig. 3 im Wesentlichen über eine übereinstimmende Breite B. Außerdem ist die Auslegung meistens so getroffen worden, dass der Umfangsrand 8, der Anschlagsrand 10 und der Bodenrand 7 über eine überwiegend gleiche Aufbauhöhe H verfügen. Darüber hinaus sind die besagten Ränder 8, 10, 7 horizontal in etwa gleich beabstandet voneinander sowie im Wesentlichen vertikal an den Boden 6 angeschlossen. Auf diese Weise ist der Rolluntersatz jeweils randseitig mit einer treppenartig ausgeformten sowie nach außen hin geschlossen ausgebileten Hohlkammer 13 ausgerüstet.

Anhand der Fig. 1 erkennt man, dass der Umfangsrand 8 und/oder der Anschlagrand 11 und/oder der Bodenrand 7 jeweils mit eckseitigen Einkerbungen 14 zur Entwässerung ausgerüstet sein können. Die beiden Randstreifen 9, 11 sind durchweg durchlaufend und unterbrechungsfrei ausgelegt. Für den Umfangsrand 8, den Anschlagrand 10 und den Bodenrand 7 gilt, dass diese bis auf die zuvor bereits angesprochenen und optionalen Einkerbungen 14 geschlossen umlaufend ausgebildet sind.

Der Rolluntersatz 1 inklusive Umfangsrand 8, Anschlagrand 10 und Bodenrand 7 sowie ggf. zusätzlich vorgesehenen bodenunterseitigen Schutzrändern 15 ist besonders vorteilhaft als einstückiges Kunststoffspritzgussteil ausgelegt. Das Kunststoff-spritzgussteil kann aus Polyethylen (PE) hergestellt sein. Die bodenunter-seitigen Schutzränder 15 sind im Allgemeinen im Bereich der drehbaren Lenkrollen 2 vorgesehen und sorgen für einen Schutz der betreffenden Lenkrollen bzw. der entsprechenden Drehlagerungen ihrer Konsolen 4.

Im Rahmen des Ausführungsbeispiels ist der Boden 6 geschlossen ausgebildet. Grundsätzlich kann der Boden 6 auch offen mit nicht näher dargestellten Ausnehmungen versehen werden. Darüber hinaus liegt es im Rahmen der Erfindung, den Boden 6 bedarfsweise zu verstärken. Zu diesem Zweck kann der Boden 6 mit Steckkanälen für hierin wahlweise einsteckbare Verstärkungsschienen ausgerüstet sein, was im Detail jedoch nicht dargestellt ist.

Die dargestellte Rollpalette verfügt in der Regel über ein elektronisches Identifizierungsmittel, bei dem es sich im Rahmen des Ausführungsbeispiels um einen RFID-Tag 16 handelt. Dieser ist geschützt an der Unterseite des Rolluntersatzes 1, typischerweise an der Unterseite des Bodens 6, angebracht. Hier hat sich eine Anordnung gleichsam hinter dem Schutzrand 15 als besonders günstig erwiesen. Zu diesem Zweck ist der RFID-Tag als gleichsam Klebestreifen mit eingebettetem Transponder an die Bodenunterseite des Rolluntersatzes 1 geklebt.

Auch der eine oder die mehreren dargestellten Transport- und/oder Lagerkästen 12 können mit einem solchen RFID-Tag ausgerüstet sein. Auf diese Weise lassen sich sowohl Bewegungen der Rollpalette als auch des zugehörigen Transport- und/oder Lagerkastens 12 registrieren. Auch können hierdurch die Rollpalette und die jeweils hierzu passenden Transport- und/oder Lagerkästen 12 gleichsam "gepaart" werden. Dazu werden die jeweiligen Daten der Rollpalette bzw. des Lager- und/oder Transportbehälters 12 sowie ihrer jeweiligen Position in einer Steuereinheit hinterlegt. Die Steuereinheit nimmt die Zuordnung der Rollpalette mit ggf. dem Transport- und/oder Lagerbehälter 12 vor. Sobald die Rollpalette bzw. der Transport- und/oder Lagerbehälter 12 bewegt wird, kann seine neue Position erfasst und an die Steuereinheit gemeldet werden.

Zu diesen Zweck lässt sich der jeweilige RFID-Tag 16 beispielsweise mit einem Handgerät erfassen und registrieren. Außerdem kann der RFID-Tag 16 zusätzlich mit einer Farb- und/oder Schriftmarkierung ausgerüstet sein. Dadurch lassen sich Waren einfach kommissionieren und kann die Bewegung des Rollcontainers inklusive der Waren zuverlässig erfasst und verfolgt werden. Hierin sind die wesentlichen Vorteile zu sehen.

## Patentansprüche

1. Rollpalette, mit einem Rolluntersatz (1) aus thermoplastischem Kunststoff, wobei
- der Rolluntersatz (1) an seiner Unterseite zwei Laufrollenpaare (2, 3) aufweist, wobei ferner
- der Rolluntersatz (1) an seiner Oberseite mit einem gegenüber einem Boden (6) hochstehenden Umfangsrand (8) ausgerüstet ist, welcher wenigstens einen ersten innenseitigen Randstreifen (9) umschließt, und wobei
- innenrandseitig des Randstreifens (9) ein Anschlagrand (10) in Richtung auf den Boden angeschlossen ist,
**dadurch gekennzeichnet, dass**
- der Anschlagrand (10) auf einem zweiten innenseitigen Randstreifen (11) aufsteht, an den innenrandseitig ein bis zum Boden (6) reichender Bodenrand (7) anschließt, sodass
- der Boden (6) mit dem Bodenrand (7), der zweite Randstreifen (11) mit dem Anschlagrand (10) und schließlich der erste Randstreifen (9) mit dem Umfangsrand (8) jeweils Aufnahmen für Transport- und/oder Lagerkästen (12) mit in dieser Reihenfolge wachsender Bodenfläche definieren.

2. Rollpalette nach Anspruch 1, **dadurch gekennzeichnet, dass** der erste Randstreifen (9) und der zweite Randstreifen (11) eine im Wesentlichen übereinstimmende Breite (B) aufweisen.

3. Rollpalette nach Anspruch 1 oder 2, **dadurch gekennzeichnet, dass** der Umfangsrand (8), der Anschlagrand (10) und der Bodenrand (7) eine überwiegend gleiche Aufbauhöhe (H) besitzen.

4. Rollpalette nach einem der Ansprüche 1 bis 3, **dadurch gekennzeichnet, dass** der Boden (6) zwei Vertiefungspaare (5) zur Aufnahme der beiden Laufrollenpaare (2, 3) einer darauf gestapelten weiteren Rollpalette aufweist.

5. Rollpalette nach Anspruch 4, **dadurch gekennzeichnet, dass** die beiden Vertiefungspaare (5) jeweils in Eckbereichen des Bodens (6) und innenseitig beabstandet zum Bodenrand (7) vorgesehen sind.

6. Rollpalette nach einem der Ansprüche 1 bis 5, **dadurch gekennzeichnet, dass** die beiden Laufrollenpaare (2, 3) in Konsolen (4) angebracht sind, die wahlweise von einem bodenunterseitigen Schutzrand (15) umgeben werden.

7. Rollpalette nach einem Der Ansprüche 1 bis 6, **dadurch gekennzeichnet, dass** der Umfangsrand (6) und/oder der Anschlagrand (10) und/oder der Bodenrand (7) eckseitige Einkerbungen (14) zur Entwässerung aufweisen.

8. Rollpalette nach einem der Ansprüche 1 bis 7, **dadurch gekennzeichnet, dass** die beiden Randstreifen (9, 11) durchlaufend und unterbrechungsfrei ausgebildet sind.

9. Rollpalette nach einem der Ansprüche 1 bis 8, **dadurch gekennzeichnet, dass** der Umfangsrand (8), der Anschlagsrand (10) und der Bodenrand (7) bis auf die optionalen Einkerbungen (14) geschlossen umlaufend ausgelegt sind.

10. Rollpalette nach einem der Ansprüche 1 bis 9, **dadurch gekennzeichnet, dass** der Rolluntersatz (1) inklusive Umfangsrand (8), Anschlagrand (10) und Bodenrand (7) sowie ggf. der Schutzränder (15) als einstückiges Kunststoffspritzgussteil ausgebildet sind.

11. Rollpalette nach Anspruch 10, **dadurch gekennzeichnet, dass** das Kunststoffspritzgussteil aus Polyethylen (PE) hergestellt ist.

12. Rollpalette nach einem der Ansprüche 1 bis 11, **dadurch gekennzeichnet, dass** der Boden (6) geschlossen ausgebildet ist.

13. Rollpalette nach einem der Ansprüche 1 bis 11, **dadurch gekennzeichnet, dass** der Boden (6) als offener Boden mit Ausnehmungen ausgelegt ist.

14. Rollpalette nach einem der Ansprüche 1 bis 13, **dadurch gekennzeichnet, dass** ein elektronisches Identifizierungsmittel, beispielsweise ein RFID-Tag (16), vorgesehen ist, und zwar vorzugsweise an der Unterseite des Bodens (6) sowie ggf. geschützt durch den Schutzrand (15).

15. Kombination aus einer Rollpalette nach einem der Ansprüche 1 bis 14 und wenigstens einem Transport- und/oder Lagerkasten, insbesondere entsprechend der Norm DIN 55423-1.

## Geänderte Patentansprüche

### Geänderte Patentansprüche gemäss Regel 137(2) EPÜ.

1. Rollpalette, mit einem Rolluntersatz (1) aus thermoplastischem Kunststoff, wobei
- der Rolluntersatz (1) an seiner Unterseite zwei Laufrollenpaare (2, 3) aufweist, wobei ferner
- der Rolluntersatz (1) an seiner Oberseite mit einem gegenüber einem Boden (6) hochstehenden Umfangsrand (8) ausgerüstet ist, welcher wenigstens einen ersten innenseitigen Randstreifen (9) umschließt, und wobei
- innenrandseitig des ersten Randstreifens (9) ein Anschlagrand (10) in Richtung auf den Boden (6) angeschlossen ist,
**dadurch gekennzeichnet, dass**
- der Anschlagrand (10) auf einem zweiten innenseitigen Randstreifen (11) aufsteht, an den innenrandseitig ein bis zum Boden (6) reichender Bodenrand (7) anschließt, sodass
- der Boden (6) mit dem Bodenrand (7), der zweite Randstreifen (11) mit dem Anschlagrand (10) und schließlich der erste Randstreifen (9) mit dem Umfangsrand (8) jeweils Aufnahmen für Transport- und/oder Lagerkästen (12) mit in dieser Reihenfolge wachsender Bodenfläche definieren und
- der Rolluntersatz (1) auf diese Weise jeweils randseitig mit einer treppenartig ausgeformten sowie nach außen hin geschlossen ausgebildeten Hohlkammer (13) ausgerüstet ist.

2. Rollpalette nach Anspruch 1, **dadurch gekennzeichnet, dass** der erste Randstreifen (9) und der zweite Randstreifen (11) eine im Wesentlichen übereinstimmende Breite (B) aufweisen.

3. Rollpalette nach Anspruch 1 oder 2, **dadurch gekennzeichnet, dass** der Umfangsrand (8), der Anschlagrand (10) und der Bodenrand (7) eine überwiegend gleiche Aufbauhöhe (H) besitzen.

4. Rollpalette nach einem der Ansprüche 1 bis 3, **dadurch gekennzeichnet, dass** der Boden (6) zwei Vertiefungspaare (5) zur Aufnahme der beiden Laufrollenpaare (2, 3) einer darauf gestapelten weiteren Rollpalette aufweist.

5. Rollpalette nach Anspruch 4, **dadurch gekennzeichnet, dass** die beiden Vertiefungspaare (5) jeweils in Eckbereichen des Bodens (6) und innenseitig beabstandet zum Bodenrand (7) vorgesehen sind.

6. Rollpalette nach einem der Ansprüche 1 bis 5, **dadurch gekennzeichnet, dass** die beiden Laufrollenpaare (2, 3) in Konsolen (4) angebracht sind, die wahlweise von einem bodenunterseitigen Schutzrand (15) umgeben werden.

7. Rollpalette nach einem der Ansprüche 1 bis 6, **dadurch gekennzeichnet, dass** der Umfangsrand (8) und/oder der Anschlagrand (10) und/oder der Bodenrand (7) eckseitige Einkerbungen (14) zur Entwässerung aufweisen.

8. Rollpalette nach einem der Ansprüche 1 bis 7, **dadurch gekennzeichnet, dass** die beiden Randstreifen (9, 11) durchlaufend und unterbrechungsfrei ausgebildet sind.

9. Rollpalette nach einem der Ansprüche 1 bis 8, **dadurch gekennzeichnet, dass** der Umfangsrand (8), der Anschlagrand (10) und der Bodenrand (7) bis auf die optionalen Einkerbungen (14) geschlossen umlaufend ausgelegt sind.

10. Rollpalette nach einem der Ansprüche 1 bis 9, **dadurch gekennzeichnet, dass** der Rolluntersatz (1) inklusive Umfangsrand (8), Anschlagrand (10) und Bodenrand (7) sowie ggf. der Schutzränder (15) als einstückiges Kunststoffspritzgussteil ausgebildet sind.

11. Rollpalette nach Anspruch 10, **dadurch gekennzeichnet, dass** das Kunststoffspritzgussteil aus Polyethylen (PE) hergestellt ist.

12. Rollpalette nach einem der Ansprüche 1 bis 11, **dadurch gekennzeichnet, dass** der Boden (6) geschlossen ausgebildet ist.

13. Rollpalette nach einem der Ansprüche 1 bis 11, **dadurch gekennzeichnet, dass** der Boden (6) als offener Boden mit Ausnehmungen ausgelegt ist.

14. Rollpalette nach einem der Ansprüche 1 bis 13, **dadurch gekennzeichnet, dass** ein elektronisches Identifizierungsmittel, beispielsweise ein RFID-Tag (16), vorgesehen ist, und zwar vorzugsweise an der Unterseite des Bodens (6) sowie ggf. geschützt durch den Schutzrand (15).

15. Kombination aus einer Rollpalette nach einem der Ansprüche 1 bis 14 und wenigstens einem Transport- und/oder Lagerkasten (12).
